(19) Europäisches Patentamt / European Patent Office / Office européen des brevets

(11) **EP 4 530 609 B1**

(12) **FASCICULE DE BREVET EUROPEEN**

(45) Date de publication et mention
de la délivrance du brevet:
**01.07.2026 Bulletin 2026/27**

(21) Numéro de dépôt: **24198334.5**

(22) Date de dépôt: **04.09.2024**

(51) Classification Internationale des Brevets (IPC):
**G01N 21/45** $^{(2006.01)}$  **G01B 9/02015** $^{(2022.01)}$
**G02B 6/12** $^{(2006.01)}$  **G01N 21/77** $^{(2006.01)}$

(52) Classification Coopérative des Brevets (CPC):
**G01N 21/45; G01N 21/7703;** G01N 2021/451;
G01N 2021/458; G01N 2021/7763;
G01N 2021/7779; G02B 6/124; G02B 6/34;
G02B 2006/12138

(54) **CAPTEUR PHOTONIQUE INTERFÉROMÉTRIQUE**

INTERFEROMETRISCHER PHOTONISCHER SENSOR

INTERFEROMETRIC PHOTONIC SENSOR

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **28.09.2023 FR 2310341**

(43) Date de publication de la demande:
**02.04.2025 Bulletin 2025/14**

(73) Titulaire: **Commissariat à l'Energie Atomique et
aux Energies
Alternatives
75015 Paris (FR)**

(72) Inventeurs:
• **LAPLATINE, Loic
38054 Grenoble Cedex 09 (FR)**
• **NICOLETTI, Sergio
38054 Grenoble Cedex 09 (FR)**

(74) Mandataire: **Atout PI Laplace
Immeuble Up On
25 Boulevard Romain Rolland
CS 40072
75685 Paris Cedex 14 (FR)**

(56) Documents cités:
EP-A1- 4 016 053  JP-A- 2018 066 664
US-A1- 2007 076 212

• BRADLEY VISSER ET AL: "A single-beam
photothermal interferometer for in-situ
measurements of aerosol light absorption",
ATMOS. MEAS. TECH. DISCUSS., 3 July 2020
(2020-07-03), XP055722221, Retrieved from the
Internet <URL:https://amt.copernicus.org/
preprints/amt-2020-242/amt-2020-242.pdf>
[retrieved on 20200813], DOI: 10.5194/
amt-2020-242

**Description**

L'invention se situe dans le domaine des capteurs photoniques, et plus particulièrement dans le domaine des capteurs dont la mesurande est déduite d'une mesure de variation d'indice optique d'un milieu ambiant. La mesurande peut être par exemple une concentration de molécules cibles dans un gaz ou liquide (capteur de gaz, biocapteur...), ou directement l'indice optique d'un milieu (réfractomètre). Avantageusement, l'invention est mise en œuvre au moyen de circuits photoniques intégrés, c'est-à-dire basée sur des guides d'onde diélectriques planaires.

Par guide d'onde planaire, on entend un guide d'onde formé dans une couche planaire d'un dispositif optoélectronique. Un guide d'onde planaire peut avoir notamment une section rectangulaire.

Il est connu que l'onde électromagnétique qui se propage dans un guide d'onde diélectrique présente un champ évanescent qui s'étend sur une distance appelée la longueur de pénétration $L_d$ (ou $d_{1/e}$) autour du guide. $L_d$ correspond à la distance à laquelle l'intensité du champ électrique est divisée par la constante e. $L_d$ dépend de la longueur d'onde et des indices optiques des milieux vus par la lumière, et vaut typiquement 75 à 150 nm pour $\lambda$ = (750 nm -1500 nm) avec des guides en SiN ou Si dans l'air. D'une manière générale, on a

$$L_d = \frac{\lambda}{2\pi} \frac{1}{\sqrt{n_{eff}^2 - n_a^2}}$$

où $n_a$ est l'indice optique du milieu ambiant et $n_{eff}$ l'indice effectif du mode guidé.

Seuls les changements d'indice optique ayant lieu dans cette zone seront susceptibles de provoquer un changement d'indice effectif du mode guidé. Ainsi, même des couches sub-nanométriques de molécules adsorbées ou capturées en surface d'un guide peuvent provoquer un changement d'indice effectif mesurable. Cela est possible car l'indice de réfraction des molécules est différent (en général supérieur) à l'indice de réfraction du milieu couvrant, typiquement : $n_{air}$ = 1, $n_{eau}$ = 1,33, $n_{biomolecule}$ = 1,45.

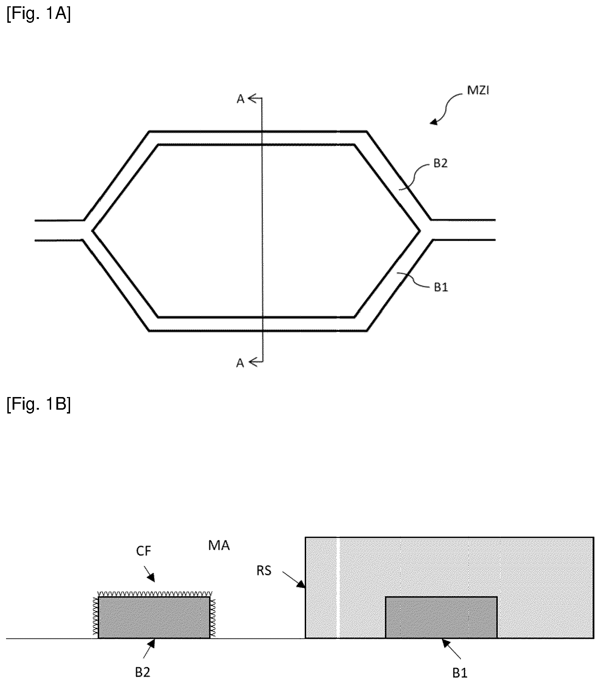

Cet effet est exploité, par exemple, pour réaliser des biocapteurs photoniques intégrés, comme illustré sur les [Fig. 1A] (vue en plan) et [Fig. 1B] (vue en coupe AA). Ces figures représentent, de manière très schématique, un interféromètre de Mach-Zehnder intégré (MZI) comprenant un bras « de référence » B1 et un bras « de mesure » B2.

Le bras de mesure B2 présente une surface supérieure en contact avec un milieu ambiant MA, par exemple une solution saline susceptible de contenir des biomolécules, tandis que le bras de référence B1 est séparé du milieu ambiant par un revêtement de surface RS d'épaisseur très supérieure à $L_d$, typiquement au moins d'un facteur 5, voire d'un facteur 10. Avantageusement, la surface supérieure du guide d'onde formant le bras de mesure B2 comporte une couche de fonctionnalisation CF adaptée pour fixer ou adsorber sélectivement une espèce biologique (bactérie, virus...) ou chimique (protéine, acide nucléique...) cible. Si l'espèce biologique ou chimique cible est présente dans le milieu ambiant, l'indice de réfraction « vu » par une onde lumineuse se propageant dans le bras de mesure change. Cela induit un déphasage par rapport à l'onde lumineuse se propageant dans le bras de référence, et donc une variation de l'intensité lumineuse à la sortie de l'interféromètre.

En réalité, les bras B1 et B2 de l'interféromètre sont généralement enroulés en spirale pour augmenter leur longueur tout en maintenant la compacité du dispositif.

(Laplatine 2022) décrit un capteur olfactif basé sur un réseau de 64 capteurs photoniques individuels du type des figures [Fig. 1A] et [Fig. 1B].

Un inconvénient de l'architecture illustrée sur les [Fig. 1A] et [Fig. 1B] est qu'elle ne permet pas de différencier un changement d'indice de réfraction du milieu ambiant en volume (« bulk ») - par exemple causé par un changement de salinité de l'eau ou un changement de pression de l'air - d'une adsorption de molécules en surface. Le signal du capteur est donc ambigu et entaché d'erreur ou d'incertitude si les deux phénomènes apparaissent simultanément, ce qui est en pratique souvent le cas.

Une solution connue à ce problème consiste à normaliser le signal du capteur « d'intérêt » par un capteur dit de référence, dont le bras de mesure n'est pas fonctionnalisé, voire est traité pour minimiser l'adsorption (revêtement dit « de blocage » ou « anti-fouling », par exemple à base de caséine). Cette approche est utilisée, par exemple, dans le domaine des capteurs à résonance plasmonique de surface, voir (Karlsson 1995).

Cette solution nécessite une très bonne spécificité de reconnaissance chimique ou biochimique pour le capteur d'intérêt et un très bon blocage pour le capteur de référence. En pratique, elle fonctionne bien quand les concentrations de molécules cibles (ou celles des éventuels interférents) mises en jeu sont assez faibles et que les variations temporelles de l'indice optique du milieu ambiant (par exemple, lorsqu'on remplace une première solution à analyser par une solution tampon de rinçage, puis par une deuxième solution à analyser) restent limitées. Lorsque ces deux conditions ne sont pas réunies, la normalisation n'est plus efficace et un signal parasite persiste.

(Ignatyeva 2021) propose de différencier les effets des indices de réfraction de volume et de surface en utilisant un cristal magnétophotonique. Il s'agit là d'une solution très complexe à mettre en œuvre, qui nécessite l'utilisation de matériaux « exotiques » et un champ magnétique externe.

US 2007/0076212 A1 divulgue un appareil pour examiner les plaques d'athérome par tomographie de cohérence optique, basé sur un interféromètre de Michelson dont un bras est constitué par deux fibres optiques destinées à être introduites dans un vaisseau sanguin au moyen d'un cathéter. La lumière sort du bout d'une première fibre optique et un miroir la dirige vers l'athérome. La lumière rétrodiffusée par ce dernier est réfléchie par un autre miroir pour être couplée dans une seconde fibre optique. Ce capteur ne permet pas de mesurer une variation d'indice optique d'un milieu.

JP 2018066664 A divulgue un capteur interférométrique comportant un interféromètre de Mach-Zender intégré, dont les deux bras sont formés par des guides d'ondes planaires qui croisent un canal fluidique. Ce capteur est uniquement destiné à réaliser des mesures de spectroscopie d'absorption.

L'invention vise à surmonter au moins en partie les inconvénients précités de l'art antérieur. Plus particulièrement elle vise à procurer un capteur photonique permettant de décorréler de manière simple et efficace les effets des changements d'indice de réfraction de volume et de surface.

Conformément à l'invention, ce but est atteint grâce à l'utilisation d'un interféromètre que l'on peut qualifier d'« hybride » car le bras de référence est un guide d'onde, tandis que le bras de mesure comporte une portion en propagation en espace libre dans le milieu ambiant.

Un objet de l'invention est donc un capteur photonique selon la revendication 1.

Des modes de réalisation particuliers de l'invention font l'objet des revendications dépendantes. D'autres caractéristiques, détails et avantages de l'invention ressortiront à la lecture de la description faite en référence aux dessins annexés donnés à titre d'exemple et qui représentent, respectivement :

[Fig.1A] et [Fig. 1B], déjà décrites, une vue en plan et en coupe AA, respectivement, d'un capteur photonique selon l'art antérieur ;

[Fig. 2], une vue en plan d'un capteur selon un premier mode de réalisation de l'invention ;

[Fig. 3], [Fig. 4], [Fig. 5] et [Fig. 6] des vues en coupe de capteurs selon quatre variantes dudit premier mode de réalisation de l'invention ;

[Fig. 7], une vue en coupe d'un capteur selon un deuxième mode de réalisation de l'invention ;

[Fig. 8], [Fig. 9], [Fig. 10] des vues en plan de capteurs de diverses variantes d'un troisième mode de réalisation de l'invention ; et

[Fig. 11], [Fig. 12] et [Fig. 13], des vues de détail en coupe de diverses variantes dudit troisième mode de réalisation de l'invention.

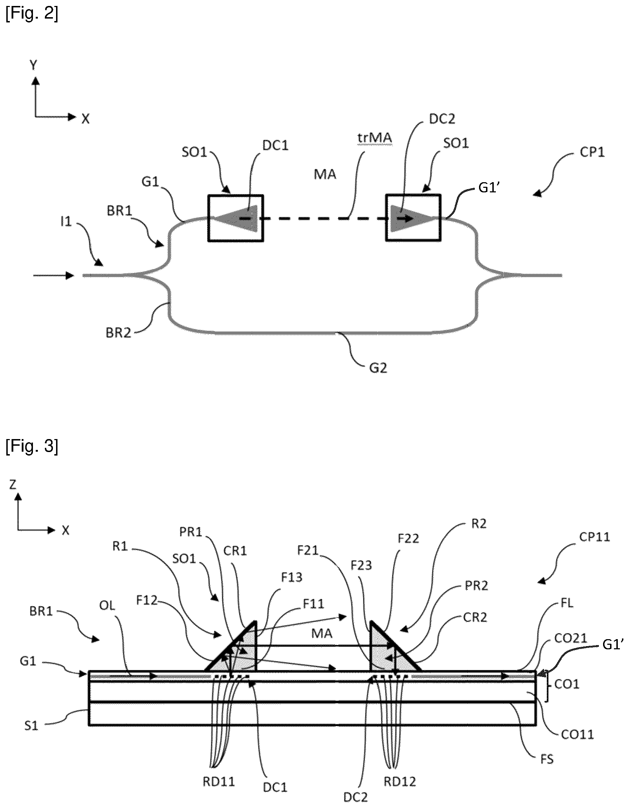

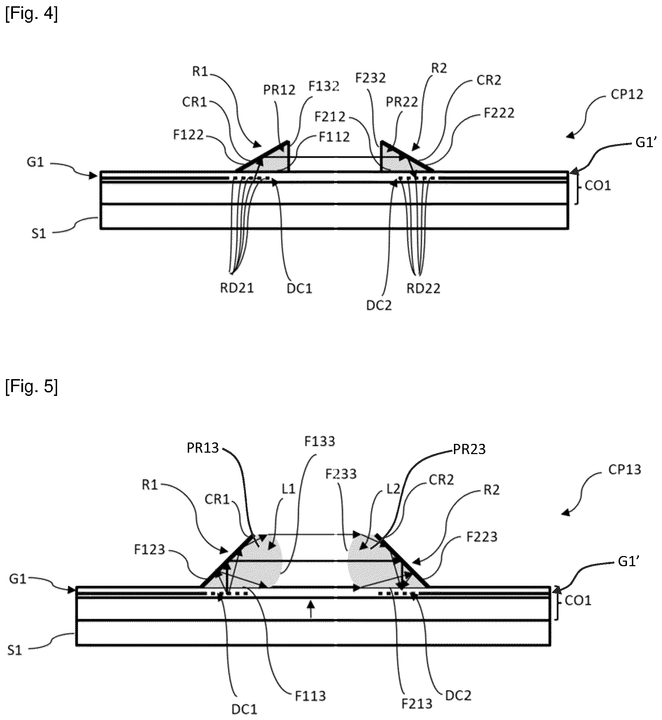

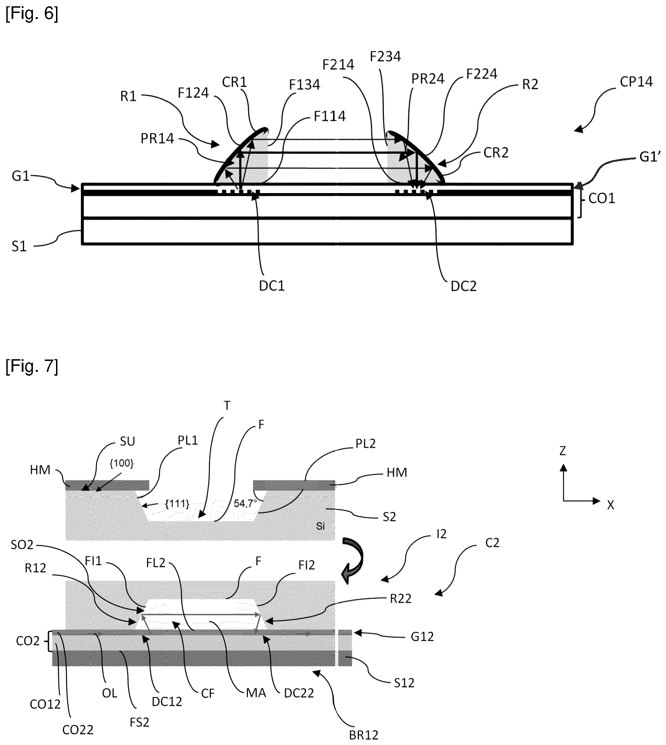

Un capteur photonique CP1 selon un premier mode de réalisation de l'invention est décrit ci-après en référence à la [Fig. 2] - vue en plan - et aux [Fig. 4], [Fig. 5] et [Fig. 6] - vues en coupe de différentes variantes.

On définit un repère orthogonal X, Y, Z dans lequel le plan (X, Y) est le plan selon lequel une surface principale d'un substrat s'étend.

Le capteur photonique CP1 comprend un interféromètre I1 ayant un premier bras BR1 et un deuxième bras BR2. Le premier bras BR1 comprend un premier guide d'onde optique G1 et un second guide d'onde optique G1', séparé du premier guide optique G1 par un intervalle. Le deuxième bras BR2 comprend un guide d'onde optique G2.

Le premier bras BR1 comprend au moins un premier dispositif de couplage DC1 entre un mode de propagation guidé dans le premier guide d'onde optique G1 et un mode de propagation libre dans un milieu ambiant MA.

Le premier bras BR1 comprend également un deuxième dispositif de couplage DC2, distinct dudit premier dispositif de couplage DC1, entre ledit mode de propagation libre dans le milieu ambiant MA et le mode de propagation guidé dans le second guide d'onde optique G1'.

Ledit premier dispositif de couplage DC1 est configuré pour extraire une onde lumineuse du premier guide d'onde G1' et ledit deuxième dispositif de couplage DC2 pour la réinjecter dans le second guide d'onde G1'.

Le premier bras BR1 comprend en outre un système optique SO1.

Le système optique SO1 est configuré pour diriger ledit mode de propagation libre vers ledit deuxième dispositif de couplage DC2.

Les premier et deuxième dispositifs de couplage DC1, DC2 et le système optique SO1 du premier bras BR1 permettent à une onde lumineuse traversant ledit premier bras BR1 d'effectuer une partie trMA de son trajet dans ledit milieu ambiant MA, en correspondant de l'intervalle séparant le premier guide d'onde G1 du second guide d'onde G1'.

Les guides d'onde optiques G1 et/ou G1' peuvent être des guides d'ondes planaires.

Le premier dispositif de couplage DC1 peut être un réseau de diffraction, notamment intégré dans une couche planaire CO1 comprenant le premier guide d'onde optique G1. Le deuxième dispositif de couplage DC2 peut être un réseau de diffraction, notamment intégré dans une couche planaire CO1 comprenant le second guide d'onde optique G1'.

Le premier bras BR1 peut être un bras de mesure et le deuxième bras BR2 peut être un bras de référence.

Selon le premier mode de réalisation, l'interféromètre I est par exemple de type Mach-Zehnder.

Un capteur photonique CP11 selon une première variante du premier mode de réalisation est décrit ci-après en relation avec la [Fig. 3].

Le guide d'onde optique G1 du premier bras BR1 du capteur photonique CP1 est par exemple agencé sur un substrat S1.

Le guide d'onde optique G1 peut être situé dans une couche planaire CO1 recouvrant une face du substrat S1. La surface de l'interféromètre destinée à être mise en contact avec le milieu ambiant MA peut comprendre au moins une portion de la face FL de la couche planaire CO1 opposée à la face FS de la couche planaire CO1 en contact avec le substrat S1.

La couche planaire CO1 peut comprendre un empilement d'une première couche CO11 et d'une deuxième couche CO21. La première couche CO11 est par exemple en silicium. La deuxième couche CO21 peut comprendre au moins un matériau diélectrique, par exemple de l'oxyde de silicium. Le guide d'onde optique G1 peut être situé dans la deuxième couche CO21.

Le système optique SO1 comprend un premier réflecteur optique R1 et un deuxième réflecteur optique R2.

Le premier réflecteur optique R1 est configuré pour diriger l'onde lumineuse extraite du premier guide d'onde G1 par le premier dispositif de couplage DC1 vers le deuxième réflecteur optique R2. Le deuxième réflecteur optique R2 est configuré pour diriger au moins une partie de l'onde lumineuse vers le deuxième dispositif de couplage DC2 la réinjectant dans le second guide d'onde G1'.

Selon la première variante du premier mode de réalisation, le premier réflecteur optique R1 comprend un prisme PR1. Le deuxième réflecteur optique R2 comprend un prisme PR2.

Le premier réflecteur optique R1 comprend une première face F11, une deuxième face F12, une troisième face F13. Le deuxième réflecteur optique R2 comprend une première face F21, une deuxième face F22, une troisième face F23.

La première face F11 du premier réflecteur optique R1 est située en vis-à-vis du premier dispositif de couplage DC1. La deuxième face F12 du premier réflecteur optique R1 est inclinée par rapport à la première face F11, notamment d'un angle égal à 45° ou sensiblement égal à 45°.

La première face F11 du premier réflecteur optique R1 peut être en contact avec la face FL de la couche planaire CO1.

La première face F21 du deuxième réflecteur optique R2 est située en vis-à-vis du deuxième dispositif de couplage DC2.

La deuxième face F12 du premier réflecteur optique R1 est configurée pour réfléchir l'onde lumineuse extraite du premier guide d'onde G1, notamment vers la deuxième face F22 du deuxième réflecteur optique R2.

La deuxième face F22 du deuxième réflecteur optique R2 est configurée pour réfléchir l'onde lumineuse, notamment vers le deuxième dispositif de couplage DC2.

La première face F21 du deuxième réflecteur optique R2 peut être en contact avec la face FL de la couche planaire CO.

La troisième face F13 du premier réflecteur optique R1 est agencée en vis-à-vis de la troisième face F23 du deuxième réflecteur optique R2.

Les premier et deuxième dispositifs de couplage DC1, DC2 peuvent être agencés dans le circuit photonique de sorte que la troisième face F13 du premier réflecteur optique R1 soit située à distance de la troisième face F23 du deuxième réflecteur optique R2. La distance F13 - F12 est typiquement d'au moins 1 mm et peut atteindre 1 cm, voire plusieurs centimètres.

Une onde lumineuse traversant le premier bras BR1 effectue une partie de son trajet dans le milieu ambiant MA, notamment entre la troisième face F13 du premier réflecteur optique R1 et la troisième face F23 du deuxième réflecteur optique R2.

La troisième face F13 du premier réflecteur optique R1 peut être perpendiculaire ou sensiblement perpendiculaire (dans la limite des tolérances de fabrication) à la face FL de la couche planaire CO. La troisième face F23 du deuxième réflecteur optique R2 peut être perpendiculaire ou sensiblement perpendiculaire (dans la limite des tolérances de fabrication) à la face FL de la couche planaire CO.

Selon cette première variante du premier mode de réalisation, le premier dispositif de couplage DC1 peut comprendre un réseau de diffraction RD11 configuré pour diffracter l'onde lumineuse se propageant dans le premier guide d'onde G1 dans une direction perpendiculaire à la face libre FL de ce dernier. Un tel réseau est connu notamment de (Zhang 2019). De même, le deuxième dispositif de couplage DC2 peut comprendre un réseau de diffraction RD12 configuré pour diffracter l'onde lumineuse se propageant en espace libre dans une direction perpendiculaire à la face libre FL du second guide d'onde G1' pour le coupler à un mode guidé de ce dernier. Pour que l'onde lumineuse diffractée se propage dans le milieu MA selon une direction sensiblement parallèle à la face FL, la deuxième face F22 du deuxième réflecteur optique R2 est inclinée par rapport à la première face F21, notamment d'un angle égal à 45° ou sensiblement égal à 45°.

Les réseaux de diffraction RD11 et RD12 peuvent être fabriqués par des techniques connues de gravure ou d'écriture directe par laser.

Un capteur photonique CP12 selon une deuxième variante du premier mode de réalisation est décrit ci-après en relation avec la [Fig. 4]. Des éléments communs avec ceux du capteur photonique CP11 sont désignés par des mêmes références et ne sont pas décrits à nouveau ci-après.

Le premier dispositif de couplage DC1 comprend un réseau de diffraction RD21. Le deuxième dispositif de couplage DC2 comprend un réseau de diffraction RD22. Contrairement au cas de la [Fig. 3], les réseaux de diffractions RD21 et RD22 sont configurés pour diffracter l'onde lumineuse se propageant dans le guide d'onde dans une direction formant un angle d'environ 8° par rapport à la face libre FL de ce dernier.

Le premier réflecteur optique R1 comprend un prisme PR12. Le deuxième réflecteur optique R2 comprend un prisme PR22.

Le prisme PR12 comprend une première face F112, une deuxième face F122, une troisième face F132. Le prisme PR22 comprend une première face F212, une deuxième face F222, une troisième face F232.

La première face F112 du prisme PR12 est située en vis-à-vis du premier dispositif de couplage DC1. La deuxième face F122 du prisme PR12 est inclinée par rapport à la première face F112.

La première face F212 du prisme PR22 est située en vis-à-vis du deuxième dispositif de couplage DC2. La deuxième face F222 du prisme PR22 est inclinée par rapport à la première face F212.

La deuxième face F122 du prisme PR12 est configurée pour réfléchir l'onde lumineuse extraite du premier guide d'onde G1, notamment vers la deuxième face F222 du prisme PR22.

La deuxième face F222 du prisme PR22 est configurée pour réfléchir l'onde lumineuse, notamment vers le deuxième dispositif de couplage DC2.

La troisième face F132 du prisme PR12 est agencée en vis-à-vis de la troisième face F232 du prisme PR22.

Pour que l'onde lumineuse réfléchie sur la deuxième face F122 du prisme PR12 se propage de façon parallèle ou sensiblement parallèle au plan (X, Y), les faces réfléchissantes F122 et F222 sont inclinées d'un angle égale à 41° ou sensiblement égal à 41° par rapport aux premières faces F112, F212, respectivement.

Dans les capteurs photoniques des [Fig. 3] et [Fig. 4], la dispersion angulaire des faisceaux diffractés par les réseaux de diffraction RD11 et RD21 induisent des pertes, comme on peut clairement le voir sur la [Fig. 3]. Pour minimiser ces pertes il est possible d'utiliser des réseaux de diffraction de grande longueur, de manière à réduire ladite dispersion angulaire. Il est également possible d'utiliser un système optique de collimation des rayons, comme illustré sur les [Fig. 5] et [Fig. 6].

Un capteur photonique CP13 selon une troisième variante du premier mode de réalisation est décrit ci-après en relation avec la [Fig. 5]. Des éléments communs avec ceux du capteur photonique CP1 et/ou du capteur photonique CP2 sont désignés par des mêmes références et ne sont pas décrits à nouveau ci-après.

Le premier réflecteur optique R1 comprend un prisme PR13 ayant une première face F113, une deuxième face F123, une troisième face F133. Le deuxième réflecteur optique R2 comprend un prisme PR23 ayant une première face F213, une deuxième face F223, une troisième face F233.

La première face F113 du prisme PR13 est située en vis-à-vis du premier dispositif de couplage DC1. La deuxième face F123 du prisme PR13 est inclinée par rapport à la première face F113.

La première face F213 du prisme PR13 est située en vis-à-vis du deuxième dispositif de couplage DC2. La deuxième face F223 du prisme PR23 est inclinée par rapport à la première face F213.

Comme expliqué plus haut, l'inclinaison des faces F123 et F223 est choisie en fonction des angles de diffraction des réseaux de diffraction pour que l'onde lumineuse réfléchie sur la deuxième face F123 du prisme PR13 se propage de façon parallèle ou sensiblement parallèle au plan (X, Y).

La deuxième face F123 du prisme PR13 est configurée pour réfléchir l'onde lumineuse extraite du premier guide d'onde G1, notamment vers la deuxième face F223 de la lentille L2.

La deuxième face F223 du prisme PR23 est configurée pour réfléchir l'onde lumineuse, notamment vers le deuxième dispositif de couplage DC2.

La troisième face F133 du prisme PR13 1 est agencée en vis-à-vis de la troisième face F233 du prisme PR23.

La troisième face F133 du prisme PR13 est convexe, de manière à former une lentille convergente L1 adaptée pour collimater le faisceau lumineux issu du dispositif de couplage DC1 et réfléchi par la deuxième face F123.

La troisième face F233 du prisme PR23 est convexe, de manière à former une lentille convergente L2. La lentille L2 est destinée à focaliser l'onde lumineuse vers le deuxième dispositif de couplage DC2.

Un capteur photonique CP14 selon une quatrième variante du premier mode de réalisation est décrit ci-après en relation avec la [Fig. 6]. Des éléments communs avec ceux du capteur photonique CP1 et/ou du capteur photonique CP2 et/ou du capteur photonique CP3 sont désignés par des mêmes références et ne sont pas décrits à nouveau ci-après.

Le premier réflecteur optique R1 comprend un prisme PR14. Le deuxième réflecteur optique R2 comprend un prisme PR24.

Le prisme PR14 comprend une première face F114, une deuxième face F124, une troisième face F134. Le prisme PR24 comprend une première face F214, une deuxième face F224, une troisième face F234.

La première face F114 du prisme PR14 est située en vis-à-vis du premier dispositif de couplage DC1. La deuxième face F124 du prisme PR14 est inclinée par rapport à la première face F114.

La première face F214 du prisme PR24 est située en vis-à-vis du deuxième dispositif de couplage DC2. La deuxième face F224 du prisme PR24 est inclinée par rapport à la première face F214.

La deuxième face F124 du prisme PR14 est configurée pour réfléchir l'onde lumineuse extraite du premier guide d'onde G1, notamment vers la deuxième face F224 du prisme PR24.

La deuxième face F224 du prisme PR24 est configurée pour réfléchir l'onde lumineuse, notamment vers le deuxième dispositif de couplage DC2.

La troisième face F134 du prisme PR14 est agencée en vis-à-vis de la troisième face F234 du prisme PR24.

La deuxième face F124 du prisme PR14 peut être concave, du côté orienté vers le premier dispositif de couplage DC1, notamment pour focaliser ou collimater l'onde lumineuse en la réfléchissant.

La deuxième face F224 du prisme PR24 peut être concave, du côté orienté vers le deuxième dispositif de couplage DC2, notamment pour collimater l'onde lumineuse en la réfléchissant.

Comme expliqué plus haut, l'inclinaison des faces F124 et F224 est choisie en fonction des angles de diffraction des réseaux de diffraction pour que l'onde lumineuse réfléchie sur la deuxième face F123 du réflecteur R1 se propage de façon parallèle ou sensiblement parallèle au plan (X, Y).

La troisième variante du premier mode de réalisation peut être combinée avec la première, la deuxième ou la quatrième variante du premier mode de réalisation.

Dans les quatre variantes décrites ci-dessus, l'onde lumineuse extraite du premier guide d'onde G1 peut être réfléchie sur la deuxième face F12, F122, F123, F124 du premier réflecteur optique R1 par réflexion totale interne. L'onde lumineuse peut ensuite également être réfléchie sur la deuxième face F22, F222, F223, F224 du deuxième réflecteur optique R2 par réflexion totale interne.

De façon optionnelle, dans les quatre variantes décrites ci-dessus, la deuxième face F12, F122, F123, F124 du premier réflecteur optique R1 peut être recouverte d'une couche réfléchissante ou d'un revêtement réfléchissant ou d'un film mince réfléchissant CR1, du côté de la deuxième face F12, F122, F123, F124 orienté vers le premier dispositif de couplage DC1. La couche réfléchissante CR1 peut comprendre au moins un matériau métallique, par exemple de l'or.

De façon optionnelle, dans les quatre variantes décrites ci-dessus, la deuxième face F22, F222, F223, F224 du deuxième réflecteur optique R2 peut être recouverte d'une couche réfléchissante ou d'un revêtement réfléchissant ou d'un film mince réfléchissant CR2, du côté de la deuxième face F22, F222, F223, F224 orienté vers le deuxième dispositif de couplage DC2. La couche réfléchissante CR2 peut comprendre au moins un matériau métallique, par exemple de l'or.

Le premier réflecteur optique R1 et le deuxième réflecteur optique R2 peuvent être fabriqués par impression en trois dimensions, également dite impression 3D, notamment exploitant la polymérisation à deux photons comme décrit par (Dietrich 2018) ou écriture laser directe comme décrit par (Malinauskas 2012).

Un capteur photonique C2 selon un deuxième mode de réalisation de l'invention est décrit ci-après en référence à la [Fig. 7]. Ce deuxième mode de réalisation diffère du premier mode de réalisation essentiellement par la structure du système optique permettant la propagation libre de l'onde lumineuse dans le milieu ambiant.

Le capteur photonique C2 comprend un interféromètre I2, par exemple de type Mach-Zehnder, ayant un premier bras BR12 et un deuxième bras. Le premier bras BR12 comprend un guide d'onde optique G12.

Le premier bras BR12 comprend un premier dispositif de couplage DC12 entre un mode de propagation guidé dans le guide d'onde et un mode de propagation libre dans un milieu ambiant MA. Le premier bras BR12 comprend un deuxième dispositif de couplage DC22 entre ledit mode de propagation libre dans le milieu ambiant et un mode de propagation guidé dans le guide d'onde G12. Le deuxième dispositif de couplage DC22 est notamment distinct dudit premier dispositif de couplage DC12. Les premier et deuxième dispositifs de couplage DC12, DC22 peuvent être des réseaux de diffraction.

Le premier bras BR12 comprend un système optique SO2 configuré pour diriger ledit mode de propagation libre vers ledit deuxième dispositif de couplage DC2.

Le premier bras BR12 peut être un bras de mesure et le deuxième bras peut être un bras de référence.

Le deuxième bras peut présenter une surface pouvant être mise en contact avec un milieu ambiant MA et présentant une couche de fonctionnalisation permettant la fixation spécifique d'espèces chimiques ou biologiques.

Le guide d'onde optique G12 peut être un guide d'onde planaire.

Le premier dispositif de couplage DC12 est notamment configuré pour extraire une onde lumineuse du guide d'onde G12. Le deuxième dispositif de couplage DC22 est notamment configuré pour réinjecter l'onde lumineuse dans le guide d'onde G12.

Le système optique SO2 du premier bras BR12 comprend un premier réflecteur optique R12 et un deuxième réflecteur optique R22.

Le guide d'onde optique G12 est par exemple agencé sur un substrat S12.

Le guide d'onde optique G12 peut être situé dans une couche planaire CO2 recouvrant une face du substrat S12. La surface de l'interféromètre I destinée à être mise en contact avec un milieu ambiant MA peut comprendre au moins une portion de la face FL2 de la couche planaire CO2 opposée à la face FS2 de la couche planaire CO en contact avec le substrat S12.

La couche planaire CO2 peut comprendre un empilement d'une première couche CO12 et d'une deuxième couche CO22. La première couche CO12 est par exemple en silicium. La deuxième couche CO22 peut comprendre au moins un matériau diélectrique, par exemple de l'oxyde de silicium. Le guide d'onde optique G12 peut être situé dans la deuxième couche CO22.

Le premier réflecteur optique R12 est configuré pour diriger l'onde lumineuse extraite du guide d'onde optique G12 par le premier dispositif de couplage DC12 vers le deuxième réflecteur optique R22, qui est lui-même configuré pour diriger ladite onde lumineuse vers le deuxième dispositif de couplage DC22 la réinjectant dans le guide d'onde G12.

Le premier réflecteur optique R12 comprend une face inclinée FI1. Le deuxième réflecteur optique R22 comprend une face inclinée FI2.

La face inclinée FI1 du premier réflecteur optique R12 est configurée pour réfléchir l'onde lumineuse extraite du guide d'onde G12, notamment vers la face inclinée FI2 du deuxième réflecteur optique R22.

La face inclinée FI2 du deuxième réflecteur optique R22 est configurée pour réfléchir l'onde lumineuse, notamment vers le deuxième dispositif de couplage DC22.

La face inclinée FI1 et la face inclinée FI2 des premier et deuxième réflecteurs optiques R12, R22, respectivement, sont notamment formées à partir de première et deuxième parois latérales PL1, PL2 d'une tranchée T obtenue par gravure humide anisotrope d'un substrat monocristallin ou d'une couche monocristalline S2, par exemple en silicium.

La face inclinée FI1 du premier réflecteur optique R12 peut être inclinée par rapport à la face FL2 de la couche planaire CO2, notamment d'un angle égal à 54,7° ou sensiblement égal à 54,7°, ce qui correspond à l'orientation d'un plan cristallin {1 1 1} d'un substrat silicium. La face inclinée FI2 du deuxième réflecteur optique R22 peut être inclinée par rapport à la face FL2 de la couche planaire CO2, notamment d'un angle égal à 180°-54,7°=125,3° ou sensiblement égal à cette valeur, ce qui correspond à l'orientation d'un plan cristallin {1 1 1} d'un substrat silicium. Les angles sont mesurés ici dans le sens antihoraire.

Les premier et deuxième réflecteurs optiques R12, R22 forment ou délimitent, avec le guide d'onde G12, un conduit fluidique CF pour ledit milieu ambiant MA. Une onde lumineuse OL traversant ledit premier bras BR12 effectue une partie de son trajet dans ledit milieu ambiant MA, à l'intérieur du conduit fluidique CF.

Le conduit fluidique CF est par exemple un micro-conduit fluidique. Par micro-conduit, on entend notamment un conduit de dimensions millimétriques ou sub-millimétriques.

De façon optionnelle, selon le deuxième mode de réalisation, la face inclinée FI1 du premier réflecteur optique R12 et la face inclinée FI2 du deuxième réflecteur optique R22 peuvent être recouvertes d'une couche réfléchissante ou d'un revêtement réfléchissant ou d'un film mince réfléchissant, du côté orienté vers le premier dispositif de couplage DC12 et du côté orienté vers le deuxième dispositif de couplage DC12, respectivement. La couche réfléchissante peut comprendre au moins un matériau métallique, par exemple de l'or. La couche réfléchissante peut être de type miroir de Bragg, formé notamment par une pluralité de surfaces planes en

oxyde de silicium ($SiO_2$) et par une pluralité de surfaces planes en nitrure de silicium ($SiN$).

Comme illustré dans la partie supérieure de la [Fig. 7], la tranchée T peut être réalisée par gravure humide. Pour cela, on recouvre d'un masque HM une surface SU s'étendant selon un plan cristallin {100} ou {010} ou {001} d'un substrat en silicium monocristallin. Une attaque chimique est ensuite réalisée à travers une ouverture dans le masque.

La tranchée T comprend une première paroi latérale PL1 et une deuxième paroi latérale PL2. Dans le cas d'un substrat monocristallin S2 en silicium, la gravure humide anisotrope peut être réalisée de sorte que les première et deuxième parois latérales PL1, PL2 s'étendent selon un plan cristallin {111}.

La tranchée T peut comprendre en outre un fond F pouvant délimiter en outre le conduit fluidique CF après assemblage d'au moins une portion de la couche monocristalline ou du substrat monocristallin S2 sur la couche CO2.

Le conduit fluidique CF peut présenter une section trapézoïdale dans un plan (X, Z). De façon optionnelle, le fond F peut être recouvert d'une couche réfléchissante ou d'un revêtement réfléchissant ou d'un film mince réfléchissant, notamment de la même couche que celle recouvrant les première et deuxième faces inclinées FI1, FI2.

Un avantage d'un capteur photonique C2 du type de celui décrit en relation avec la [Fig. 7] est lié au fait qu'il est rapide à fabriquer et présente un coût réduit.

Un avantage d'un tel capteur photonique C2 réside dans le fait qu'une pluralité, notamment des milliers, de premier et deuxième réflecteurs optiques R12, R22 et de conduits fluidiques CF peuvent être réalisés simultanément sur un même substrat S12. De cette façon, une pluralité, notamment des milliers, de premier et deuxième réflecteurs optiques R12, R22 peuvent être assemblés simultanément avec une couche CO2 comprenant un guide d'onde G12 et recouvrant un même substrat S12, grâce par exemple à une unique étape de collage du substrat ou de la couche S2 sur le substrat S12 avec interposition du guide d'onde optique G12.

Un avantage d'un tel capteur photonique C2 est lié au fait que l'inclinaison des premier et deuxième réflecteurs optiques R12, R22 par rapport au guide d'onde optique G12 peut être identique ou sensiblement identique pour une pluralité de premier et deuxième réflecteurs optiques R12, R22 agencés sur un même substrat S12 ou sur des substrats S12 différents, grâce au fait que cette inclinaison dépend de la structure cristalline du substrat S2. Les réseaux de diffractions de dispositifs de couplage DC12 et DC22 doivent être adaptés à ces inclinaisons, mais cela ne pose pas de difficulté particulière.

L'assemblage des premier et deuxième réflecteurs optiques R12, R22 sur le substrat S12 avec interposition du guide d'onde optique G12 peut être réalisé par collage, de préférence à température ambiante - par exemple un collage par adhésif polymère (colle UV), déposé par exemple par sérigraphie - afin d'assurer la compatibilité avec une fonctionnalisation par biomolécules. Dans d'autres modes de réalisation, il sera possible d'utiliser un collage anodique, un collage moléculaire ou un collage eutectique. Il en résulte une bonne tenue mécanique et thermique d'un tel capteur photonique C2.

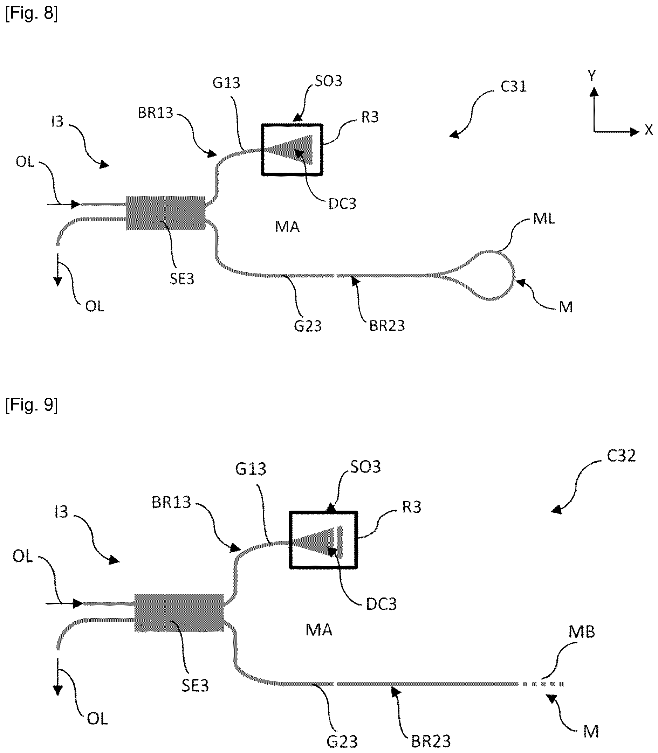

Un capteur photonique C31 selon une première variante d'un troisième mode de réalisation est décrit ci-après en référence à la [Fig. 8].

Le capteur photonique C31 comprend un interféromètre I3 ayant un premier bras BR13 et un deuxième bras BR23. Le premier bras BR13 comprend un guide d'onde optique G13. Le deuxième bras BR23 comprend un guide d'onde optique G23.

Le premier bras BR13 comprend un dispositif de couplage DC3 entre un mode de propagation guidé dans le guide d'onde optique G13 et un mode de propagation libre dans un milieu ambiant MA. Le premier bras BR13 comprend un système optique SO3 configuré pour diriger ledit mode de propagation libre vers ledit dispositif de couplage DC3 entre ledit mode de propagation libre dans le milieu ambiant et un mode de propagation guidé dans le guide d'onde optique G13. Une onde lumineuse OL traversant ledit premier bras BR13 effectue une partie de son trajet dans ledit milieu ambiant MA.

Le premier bras BR13 peut être un bras de mesure et le deuxième bras BR23 peut être un bras de référence.

Le dispositif de couplage DC3 peut être un réseau de diffraction.

Le deuxième bras BR23 peut présenter une surface pouvant être mise en contact avec ledit milieu ambiant MA et présentant une couche de fonctionnalisation permettant la fixation spécifique d'espèces chimiques ou biologiques.

Le guide d'onde optique G13 peut être un guide d'onde planaire. Le guide d'onde optique G23 peut être un guide d'onde planaire.

Selon le troisième mode de réalisation, l'interféromètre I3 peut être un interféromètre de type Michelson. Le premier bras BR13 comprend un dispositif de couplage unique DC3 configuré pour extraire une onde lumineuse du guide d'onde optique G13 et pour la réinjecter dans le guide d'onde optique G13 après réflexion par un réflecteur optique R3 d'un système optique SO3, espacé dudit dispositif de couplage DC3. Une onde lumineuse OL traversant ledit premier bras BR13 effectue ainsi une partie de son trajet dans ledit milieu ambiant MA.

Le dispositif de couplage DC3 est destiné à réaliser un couplage entre un mode de propagation guidé dans le guide d'onde optique G13 et un mode de propagation libre dans un milieu ambiant MA.

Le système optique SO3 est configuré pour diriger ledit mode de propagation libre vers ledit dispositif de couplage DC3.

Le deuxième bras BR23 de l'interféromètre I3 peut comprendre un miroir M.

Selon cette première variante du troisième mode de réalisation, le miroir M est formé par une boucle du guide d'onde optique G23, notamment situé dans une couche planaire CO3.

L'interféromètre I3 peut comprendre un séparateur SE3, réalisé par exemple au moyen d'un interféromètre multimodes, pour séparer une onde lumineuse OL provenant d'un port d'entrée en une première composante dirigée vers le premier bras BR13 et un deuxième composante dirigée vers le deuxième bras BR23, et pour recombiner les ondes lumineuses provenant du premier de du deuxième bras et les diriger vers un port de sortie.

Un capteur photonique C32 selon une deuxième variante du troisième mode de réalisation est décrit ci-après en référence à la [Fig. 9]. Des éléments communs avec ceux de la première variante du troisième mode de réalisation sont désignés par des mêmes références.

Selon cette deuxième variante du troisième mode de réalisation, le miroir M comprend un miroir de Bragg MB, notamment formé par une alternance de matériaux d'indices de réfraction différents, séparés par des surfaces planes.

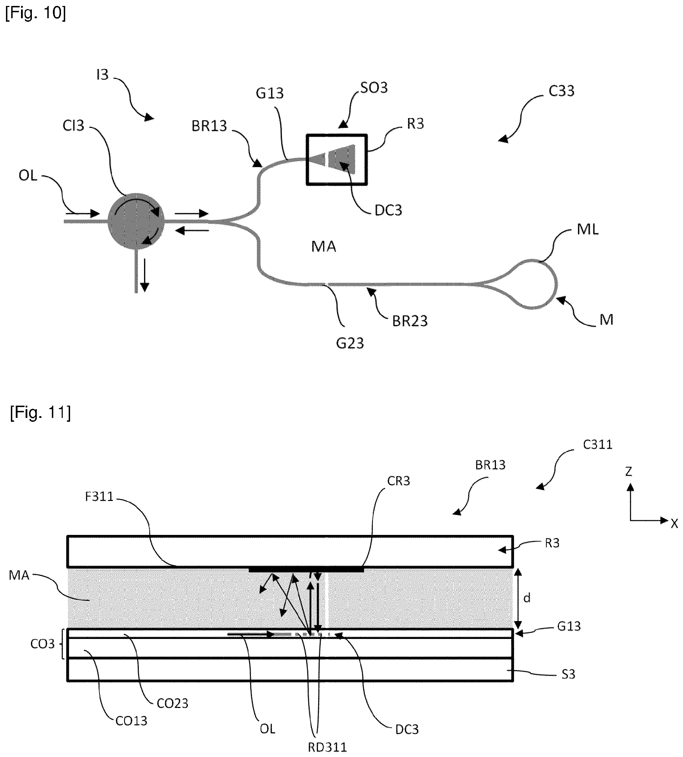

Un capteur photonique C33 selon une troisième variante du troisième mode de réalisation est décrit ci-après en référence à la [Fig. 10]. Des éléments communs avec ceux de la première et de la deuxième variante du troisième mode de réalisation sont désignés par des mêmes références.

Selon cette troisième variante du troisième mode de réalisation, l'interféromètre I3 comprend un circulateur CI3 au lieu du séparateur SE3 réalisé au moyen d'un interféromètre multimodes. Le circulateur CI3 présente des pertes moindres qu'un interféromètre multimodes, mais sa réalisation - notamment intégrée - est plus complexe.

Selon cette troisième variante du troisième mode de réalisation, le miroir M peut être formé par une boucle du guide d'onde optique G23, notamment situé dans une couche planaire CO3.

Une première variante du premier bras BR13 d'un interféromètre I3 d'un capteur photonique C311 selon le troisième mode de réalisation de l'invention est décrite ci-après en référence à la [Fig. 11].

Le guide d'onde optique G13 du premier bras BR13 du capteur photonique C311 est par exemple agencé sur un substrat S3.

Le guide d'onde optique G13 peut être formé dans une couche planaire CO3.

La couche planaire CO3 peut comprendre un empilement d'une première couche CO13 et d'une deuxième couche CO23. La première couche CO13 est par exemple en silicium. La deuxième couche CO22 peut comprendre au moins un matériau diélectrique, par exemple de l'oxyde de silicium. Le guide d'onde optique G13 peut être situé dans la deuxième couche CO23.

Le réflecteur optique R3 peut comprendre un miroir, par exemple planaire.

Le réflecteur optique R3 comprend une face réfléchissante F311 en vis-à-vis du guide d'onde optique G13. Le réflecteur optique R3 et le guide d'onde optique G13 sont par exemple séparés d'une distance d. La distance d est par exemple de l'ordre de 150 micromètres. Le réflecteur optique R3 peut être formé dans une couche planaire délimitant avec le guide d'onde optique G13 un microcanal pour le milieu ambiant MA.

Le dispositif de couplage DC3 peut comprendre un réseau de diffraction RD311.

Selon cette première variante, le réseau de diffraction RD311 est notamment configuré pour diffracter l'onde lumineuse se propageant dans le guide d'onde dans une direction perpendiculaire à la face libre de ce dernier perpendiculairement au plan X, Y.

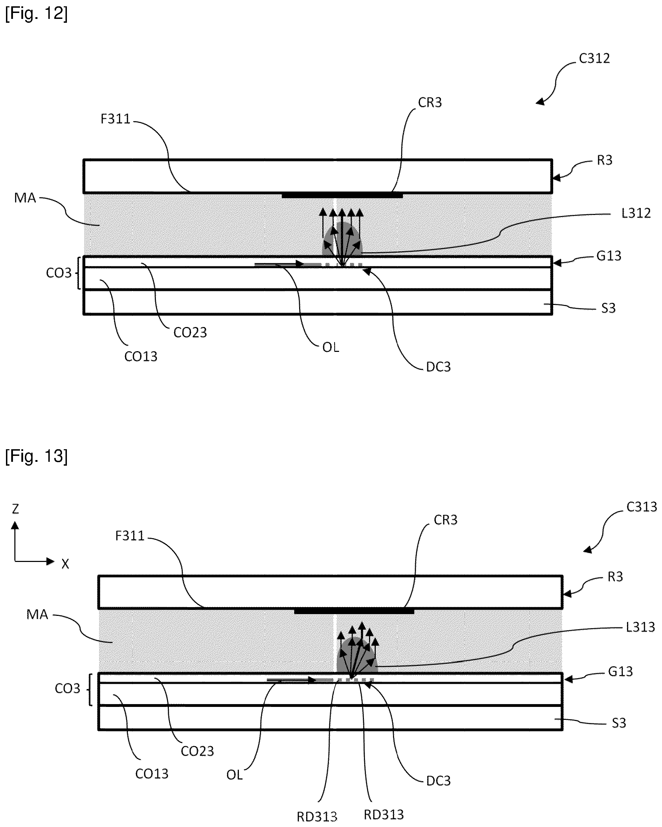

Une deuxième variante du premier bras BR13 d'un interféromètre I3 d'un capteur photonique C312 selon le troisième mode de réalisation de l'invention est décrite ci-après en référence à la [Fig. 12]. Des éléments communs avec ceux de la variante décrite en référence à la [Fig. 11] sont désignés par des mêmes références.

Le système optique SO3 peut comprendre une lentille convergente L312. La lentille convergente L312 est destinée à focaliser ou collimater l'onde lumineuse OL.

La lentille convergente L312 est par exemple une lentille asphérique.

Une troisième variante du premier bras BR13 d'un interféromètre I3 d'un capteur photonique C313 selon le troisième mode de réalisation de l'invention est décrite ci-après en référence à la [Fig. 13]. Des éléments communs avec ceux des variantes décrites en référence aux [Fig. 11] et [Fig. 12] sont désignés par des mêmes références.

Le système optique SO3 peut comprendre une lentille convergente L313. La lentille convergente L313 est destinée à focaliser ou collimater l'onde lumineuse OL.

La lentille convergente L313 est par exemple une lentille convergente de forme quelconque. La forme de la lentille convergente L313 peut être choisie en fonction du dispositif de couplage DC3.

Le dispositif de couplage DC3 peut comprendre un réseau de diffraction RD313.

Le réseau de diffraction RD313 et la lentille convergente L313 peuvent être configurés de sorte que la lumière extraite du guide d'onde optique G13 se propage de façon perpendiculaire ou sensiblement perpendiculaire au plan (X, Y), même si le réseau diffraction RD313 est configuré pour diffracte une onde lumineuse se propageant dans le guide d'one dans une direction qui n'est pas perpendiculaire au plan (X, Y).

De façon optionnelle, dans les trois variantes décrites ci-dessus en relation avec les [Fig. 11], [Fig. 12] et [Fig. 13], la face réfléchissante F311 du réflecteur optique R3 peut être au moins partiellement recouverte d'une couche réfléchissante ou d'un revêtement réfléchissant ou d'un film mince réfléchissant CR3. La couche réfléchissante CR3 peut comprendre au moins un matériau métallique, par exemple de l'or. La couche réfléchissante CR3 peut être située en vis-à-vis du dispositif de couplage DC3.

Dans tous les modes de réalisation considérés, le deuxième bras de l'interféromètre est isolé du milieu ambiant, par exemple par une couche d'oxyde. Le signal interférométrique permet donc de déterminer l'indice optique de volume du milieu ambiant.

Dans le cas d'un interféromètre de Mach-Zehnder, il est connu que le bruit $3\sigma$ de la mesure de variation de phase est de l'ordre de $\varphi_{min}$ = 5 mrad à $\lambda \approx$ 850nm. Si l'on considère une longueur de propagation de L=6 mm, cela permet de mesurer des changement d'indice de réfraction de l'ordre de 1,1 $\times 10^{-7}$ RIU (RIU : unité de mesure, sans dimensions, de l'indice de réfraction) :

$$\Delta n_{min} = \varphi_{min} \, \lambda \, / \, (2\pi \, L) = 1{,}1 \; 10^{-7} \, \text{RIU}$$

Cela correspond à la précision des réfractomètres scientifiques de très haute gamme.

A titre de comparaison, un interféromètre de Mach-Zehnder selon l'art antérieur servant de biocapteur et présentant un bras sensible de 1 cm de long a une limite de détection (LoD) bulk de l'ordre de 1 $\times 10^{-6}$ RIU.

L'invention a été décrite en référence à des modes de réalisation particuliers, mais des variantes sont possibles. Par exemple, différents procédés technologiques, autres que ceux mentionnés spécifiquement, peuvent être utilisés pour la fabrication des dispositifs de couplage et du système optique dirigeant l'onde lumineuse en propagation libre dans le milieu ambiant.

Références

(Dietrich 2018) P.-I. Dietrich et al. « In situ 3D nanoprinting of free-form coupling elements for hybrid photonic integration », Nature Photonics, Vol. 12, avril 2018, pages 241 - 247.

(Karlsson 1995) R. Karlsson et al. « Surface plasmon resonance detection and multispot sensing for direct monitoring of interactions involving low-molecular-weight analytes and for determination of low affinities ». Analytical biochemistry, 228(2), 274-280, 1995.

(Ignatyeva 2021) D. Ignateyeva et al. « Sensing of Surface and Bulk Refractive Index Using Magnetophotonic Crystal with HybridMagneto-Optical Response »Sensors 2021, 21, 1984.

(Laplatine 2022) L. Laplatine et al. « Silicon photonic olfactory sensor based on an array of 64 biofunctionalized Mach-Zender interferometers » Optics Express, Vol. 30, No. 19, 12 Sep. 2022.

(Malinauskas 2012).M. Malinauskas et la. « 3D microoptical elements formed in a photostructurable germaniumsilicate by direct laser writing » Optics and Lasers in Engineering 50 (2012), 1785 - 1788.

(Zhang 2019) Z. Zhang et al. « High-efficiency apodized bidirectional grating coupler for perfectly vertical coupling » Optics Letters, Vol. 44, No. 20, 15 octobre 2019.

## Revendications

1. Capteur photonique comprenant un interféromètre (I1, I2, I3) ayant un premier (BR1, BR12, BR13) et un deuxième bras (BR2, BR23) comprenant des guides d'onde optiques planaires respectifs, dans lequel le premier bras (BR1, BR12, BR13) comprend :

   - au moins un premier dispositif de couplage (DC1, DC12, DC3) entre un mode de propagation guidé dans un guide d'onde et un mode de propagation libre dans un milieu ambiant (MA) ; et
   - un système optique (SO1, SO2, SO3) configuré pour diriger ledit mode de propagation libre vers ledit (DC3) ou un deuxième dispositif de couplage (DC2, DC22) entre ledit mode de propagation libre dans le milieu ambiant et un mode de propagation guidé dans ledit ou un autre guide d'onde ;
   moyennant quoi une onde lumineuse (OL) traversant ledit premier bras effectue une partie de son trajet dans ledit milieu ambiant ;
   **caractérisé en ce que** ledit ou chaque dit dispositif de couplage comprend un réseau de diffraction.

2. Capteur photonique selon la revendication 1 comprenant un dit deuxième dispositif de couplage (DC2, DC22), distinct dudit premier dispositif de couplage (DC1, DC12), ledit premier dispositif de couplage (DC1, DC12) étant configuré pour extraire ladite onde lumineuse du guide d'onde (G1, G12) et ledit deuxième dispositif de couplage (DC2, DC22) pour la réinjecter dans ledit ou ledit autre guide d'onde (G1', G12), dans lequel ledit système optique (SO1, SO2) comprend un premier et un deuxième réflecteur optique, le premier réflecteur optique (R1, R12) étant configuré pour diriger l'onde lumineuse extraite du guide d'onde par le premier dispositif de couplage (DC1, DC12) vers le deuxième réflecteur optique (R2, R22), qui est à son tour configuré pour diriger ladite onde lumineuse vers le deuxième dispositif de couplage (DC2, DC22) la réinjectant dans ledit ou ledit autre guide d'onde (G1, G12).

3. Capteur photonique selon la revendication 2 dans lequel le premier (R1) et le deuxième réflecteur optique (R2) sont des prismes (PR1, PR2, PR12, PR22, PR13, PR23, PR14, PR24) présentant :

   - une première face (F11, F21 ; F112, F212 ; F114, F214) en vis-à-vis du premier ou du deuxième dispositif de couplage, respectivement ;
   - une deuxième face (F12, F22 ; F122, F222 ; F124, F224) inclinée par rapport à la première face, configurée pour réfléchir l'onde lumineuse et
   - une troisième face (F13, F23 ; F132, F232 ; F134, F234), les troisièmes faces du premier et du deuxième réflecteur optique étant agencées en vis-à-vis.

4. Capteur photonique selon la revendication 3 dans lequel la deuxième face (F124, F224) d'au moins un du premier et du deuxième réflecteur optique est convexe, pour focaliser ou collimater l'onde lumineuse en la réfléchissant.

5. Capteur photonique selon l'une des revendications 3 ou 4 dans lequel la troisième face (F133, F233) d'au moins un du premier et du deuxième réflecteur optique est convexe, de manière à former une lentille convergente pour focaliser ou collimater l'onde lumineuse en la réfléchissant.

6. Capteur photonique selon la revendication 2 dans lequel le premier et le deuxième réflecteur optique (R12, R22) sont des faces inclinées (FI1, FI2) d'une tranchée (T) obtenue par gravure humide anisotrope d'un substrat monocristallin (S2) formant, avec le guide d'onde, un conduit fluidique (CF) pour ledit milieu ambiant.

7. Capteur photonique selon l'une des revendications précédentes dans lequel ledit interféromètre (I1, I2) est de type Mach-Zehnder.

8. Capteur photonique selon la revendication 1 dans lequel ledit interféromètre (I3) est de type Michelson, le premier bras (BR13) présentant un dispositif de couplage (DC3) unique configuré pour extraire ladite onde lumineuse du guide d'onde (G13) et pour la réinjecter dans le guide d'onde après réflexion par un réflecteur optique (R3) dudit système optique (SO3), espacé dudit dispositif de couplage (DC3).

9. Capteur photonique selon la revendication 1, dans lequel ledit deuxième bras (BR2, BR23) présente une surface pouvant être mise en contact avec ledit milieu ambiant (MA) et présentant une couche de fonctionnalisation permettant la fixation spécifique d'espèces chimiques ou biologiques.

**Patentansprüche**

1. Photonischer Sensor, der ein Interferometer (11, 12, 13) umfasst, das einen ersten (BR1, BR12, BR13) und einen zweiten Schenkel (BR2, BR23) aufweist, die jeweilige planare optische Wellenleiter umfassen, wobei der erste Schenkel (BR1, BR12, BR13) umfasst:

   - mindestens eine erste Koppelvorrichtung (DC1, DC12, DC3) zwischen einem geführten Ausbreitungsmodus in einem Wellenleiter und einem freien Ausbreitungsmodus in einem Umgebungsmedium (MA); und
   - ein optisches System (SO1, SO2, SO3), das so ausgestaltet ist, dass es den freien Ausbreitungsmodus in Richtung der besagten (DC3) oder einer zweiten Koppelvorrichtung (DC2, DC22) zwischen dem freien Ausbreitungsmodus in dem Umgebungsmedium und einem geführten Ausbreitungsmodus in dem besagten oder einem anderen Wellenleiter lenkt; wodurch eine Lichtwelle (OL), die den besagten ersten Schenkel durchläuft, einen Teil ihres Weges in dem Umgebungsmedium zurücklegt; **dadurch gekennzeichnet, dass** die besagte oder jede besagte Koppelvorrichtung ein Beugungsgitter umfasst.

2. Photonischer Sensor nach Anspruch 1, der eine besagte zweite Koppelvorrichtung (DC2, DC22) umfasst, die von der ersten besagten Koppelvorrichtung (DC1, DC12) getrennt ist, wobei die besagte erste Koppelvorrichtung (DC1, DC12) so ausgestaltet ist, dass sie die Lichtwelle aus dem Wellenleiter (G1, G12) extrahiert, und die besagte zweite Koppelvorrichtung (DC2, DC22) so, dass sie sie wieder in den besagten oder den anderen Wellenleiter (G1', G12) einspeist, wobei das besagte optische System (SO1, SO2) einen ersten und einen zweiten optischen Reflektor umfasst, wobei der erste optische Reflektor (R1, R12) so ausgestaltet ist, dass er die von der ersten Koppelvorrichtung (DC1, DC12) aus dem Wellenleiter extrahierte Lichtwelle in Richtung des zweiten optischen Reflektors (R2, R22) lenkt, der seinerseits so ausgestaltet ist, dass er die besagte Lichtwelle in Richtung der zweiten Koppelvorrichtung (DC2, DC22) lenkt, die sie wieder in den besagten oder den anderen Wellenleiter (G1, G12) einspeist.

3. Photonischer Sensor nach Anspruch 2, wobei der erste (R1) und der zweite optische Reflektor (R2) Prismen (PR1, PR2, PR12, PR22, PR13, PR23, PR14, PR24) sind, die Folgendes aufweisen:

   - eine erste Seite (F11, F21; F112, F212; F114, F214), die der ersten bzw. der zweiten Koppelvorrichtung gegenüberliegt;
   - eine in Bezug auf die erste Seite geneigte zweite Seite (F12, F22; F122, F222; F124, F224), die so ausgestaltet ist, dass sie die Lichtwelle reflektiert, und
   - eine dritte Seite (F13, F23; F132, F232; F134, F234), wobei die dritten Seiten des ersten und des zweiten optischen Reflektors einander gegenüberliegend angeordnet sind.

4. Photonischer Sensor nach Anspruch 3, wobei die zweite Seite (F124, F224) mindestens eines des ersten und des zweiten optischen Reflektors konvex ist, um die Lichtwelle durch Reflektieren derselben zu fokussieren oder zu kollimieren.

5. Photonischer Sensor nach einem der Ansprüche 3 oder 4, wobei die dritte Seite (F133, F233) mindestens eines des ersten und des zweiten optischen Reflektors konvex ist, sodass eine Sammellinse gebildet wird, um die Lichtwelle durch Reflektieren derselben zu fokussieren oder zu kollimieren.

6. Photonischer Sensor nach Anspruch 2, wobei der erste und der zweite optische Reflektor (R12, R22) geneigte Seiten (FI1, FI2) eines Grabens (T) sind, der durch anisotropes Nassätzen eines einkristallinen Substrats (S2) erhalten wurde und zusammen mit dem Wellenleiter einen Fluidkanal (CF) für das besagte Umgebungsmedium bildet.

7. Photonischer Sensor nach einem der vorstehenden Ansprüche, wobei das besagte Interferometer (11, 12) vom Mach-Zehnder-Typ ist.

8. Photonischer Sensor nach Anspruch 1, wobei das besagte Interferometer (I3) vom Michelson-Typ ist, wobei der erste Schenkel (BR13) eine einzige Koppelvorrichtung (DC3) aufweist, die so ausgestaltet ist, dass sie die besagte Lichtwelle aus dem Wellenleiter (G13) extrahiert und sie nach Reflexion durch einen optischen Reflektor (R3) des besagten optischen Systems (SO3), der von der besagte Koppelvorrichtung (DC3) beabstandet ist, wieder in den Wellenleiter einspeist.

9. Photonischer Sensor nach Anspruch 1, wobei der besagte zweite Schenkel (BR2, BR23) eine Fläche aufweist, die mit dem besagten Umgebungsmedium (MA) in Kontakt gebracht werden kann und eine Funktionalisierungsschicht aufweist, die die spezifische Bindung von chemischen oder biologischen Spezies ermöglicht.

**Claims**

1. Photonic sensor comprising an interferometer (11, 12, 13) having a first (BR1, BR12, BR13) and a second arm (BR2, BR23) comprising respective planar optical waveguides, wherein the first arm (BR1, BR12, BR13) comprises:

   - at least one first coupling device (DC1, DC12, DC3) between a guided propagation mode in a waveguide and a free propagation mode in an ambient environment (MA); and
   - an optical system (SO1, SO2, SO3) configured to direct said free propagation mode to said (DC3) or a second coupling device (DC2, DC22) between said free propagation mode in the ambient environment and a guided propagation mode in said or another waveguide;
   by means of which a lightwave (OL) passing through said first arm performs a part of its path in said ambient environment;
   **characterised in that** said or each said coupling device comprises a diffraction grating.

2. Photonic sensor according to claim 1, comprising a said second coupling device (DC2, DC22), distinct from said first coupling device (DC1, DC12), said first coupling device (DC1, DC12) being configured to extract said lightwave from the waveguide (G1, G12) and said second coupling device (DC2, DC22) to reinject it into said or said other waveguide (G1', G12), wherein said optical system (SO1, SO2) comprises a first and a second optical reflector, the first optical reflector (R1, R12) being configured to direct the lightwave extracted from the waveguide by the first coupling device (DC1, DC12) to the second optical reflector (R2, R22), which is itself configured to direct said lightwave to the second coupling device (DC2, DC22) reinjecting it into said or said other waveguide (G1, G12).

3. Photonic sensor according to claim 2, wherein the first (R1) and the second optical reflector (R2) are prisms (PR1, PR2, PR12, PR22, PR13, PR23, PR14, PR24) having:

   - a first face (F11, F21; F112, F212; F114, F214) opposite the first or the second coupling device, respectively;
   - a second face (F12, F22; F122, F222; F124, F224) inclined with respect to the first face, configured to reflect the lightwave and
   - a third face (F13, F23; F132, F232; F134, F234), the third faces of the first and of the second optical reflector being arranged opposite one another.

4. Photonic sensor according to claim 3, wherein the second face (F124, F224) of at least one of the first and of the second optical reflector is convex, to focus or collimate the lightwave by reflecting it.

5. Photonic sensor according to any one of claims 3 or 4, wherein the third face (F133, F233) of at least one of the first and of the second optical reflector is convex, so as to form a convergent lens to focus or collimate the lightwave by reflecting it.

6. Photonic sensor according to claim 2, wherein the first and the second optical reflector (R12, R22) are inclined faces (FI1, FI2) of a trench (T) obtained by anisotropic wet etching of a monocrystalline substrate (S2) forming, with the waveguide, a fluid conduit (CF) for said ambient environment.

7. Photonic sensor according to any one of the preceding claims, wherein said interferometer (11, 12) is of the Mach-Zehnder type.

8. Photonic sensor according to claim 1, wherein said interferometer (I3) is of the Michelson type, the first arm (BR13) having one single coupling device (DC3) configured to extract said lightwave from the waveguide (G13) and to reinject it into the waveguide after reflection by an optical reflector (R3) of said optical system (SO3), spaced apart from said coupling device (DC3).

9. Photonic sensor according to claim 1, wherein said second arm (BR2, BR23) has a surface being able to be brought into contact with said ambient environment (MA) and having a functionalization layer, enabling the specific binding of chemical or biological species.

[Fig. 1A]

[Fig. 1B]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

## RÉFÉRENCES CITÉES DANS LA DESCRIPTION

**Documents brevets cités dans la description**

- US 20070076212 A1

- JP 2018066664 A

**Littérature non-brevet citée dans la description**

- **P.-I. DIETRICH et al.** In situ 3D nanoprinting of free-form coupling elements for hybrid photonic integration. *Nature Photonics*, 12 April 2018, 241-247
- **R. KARLSSON et al.** Surface plasmon resonance detection and multispot sensing for direct monitoring of interactions involving low-molecular-weight analytes and for determination of low affinities. *Analytical biochemistry*, 1995, vol. 228 (2), 274-280
- **D. IGNATEYEVA et al.** Sensing of Surface and Bulk Refractive Index Using Magnetophotonic Crystal with Hybrid Magneto-Optical Response. *Sensors*, 2021, vol. 21, 1984

- **L. LAPLATINE et al.** Silicon photonic olfactory sensor based on an array of 64 biofunctionalized Mach-Zender interferometers. *Optics Express*, 12 September 2022, vol. 30 (19)
- **M. MALINAUSKAS**. 3D microoptical elements formed in a photostructurable germaniumsilicate by direct laser writing. *Optics and Lasers in Engineering*, 2012, vol. 50, 1785-1788
- **Z. ZHANG et al.** High-efficiency apodized bidirectional grating coupler for perfectly vertical coupling. *Optics Letters*, 15 October 2019, vol. 44 (20)